# EUROPEAN PATENT SPECIFICATION

(11) **EP 0 697 908 B1**
(45) Date of publication and mention of the grant of the patent: **26.08.1998**
(21) Application number: 94916440.4
(22) Date of filing: 13.05.1994
(51) Int. Cl.: B01D 33/04, B01D 33/48

(54) **METHOD AND APPARATUS FOR CLEANING ENDLESS FILTERING BANDS**
VERFAHREN UND VORRICHTUNG ZUR REINIGUNG VON ENDLOSEN FILTERBÄNDERN
PROCEDE ET APPAREIL DE NETTOYAGE DE BANDES DE FILTRAGE SANS FIN

(30) Priority: 14.05.1993 NO 931755
(43) Date of publication of application: 28.02.1996
(73) Proprietor: SALSNES FILTER AS, No-7817 Salsnes (NO)
(72) Inventor: FOSSENG, Audun, Norway (NO)
(74) Representative: Willquist, Bo
(86) International application number: NO9400093
(87) International publication number: WO9426387

(56) References cited:
- DE-B- 1 232 111
- DE-B- 1 272 888
- FR-A- 1 352 960
- US-A- 4 042 507

## Description

The invention relates to a method for cleaning an endless filtering belt, e.g. a filtering belt for purification of sewage water in a municipal purification plant or contaminated water from processing plants, fish rearing plants and similar sources. Such a cleaning device is described in the introductory part of claim 1.

Cleaning devices with endless filtering belts have suffered from the problem of migration of certain residues on the belt and clogging thereof. For example, this has been the case with fat residues in municipal sewage water and starch residues from potato processing plants.

From US-patent specification No. 2,885,080 it is known to cleanse a filtering belt from above with water jets from above. The heating of the water to improve the cleaning effect is however energy consuming and the water supply means increased need for separation, particularly when the water is the primary cleaning medium for the filtering belt and thus has to be supplied in considerable quantity.

In Norwegian patent specification No. 165,826 (WO-A-8702266), there is described a device for blowing air onto the filtering belt from beneath, to lift water and particles from the belt and guide the water back to the belt. This device has also been unable to establish a satisfactory operation in the most common cleaning plants, i.e. for purification of sewage water.

The main object of the invention is to provide a method for cleaning filtering belts, to remove fat residues from such endless filtering belts, in which the method can be applied satisfactory for filtering belts for different cleaning purposes.

The invention provides a method as stated in claim 1, in which the characterizing part describes the novel features.

With this method, it is possible to attain satisfactory cleaning operation with endless filtering belts even with difficult types of contaminated water.

The invention furthermore provides an apparatus as defined in claim 2.

The invention is described in the following with reference to the drawings, in which
Fig. 1 is a schematic side view illustrating a water treatment plant with an endless filtering belt, the plant being provided with a cleaning device for the filtering belt, according to the invention, while
Fig. 2 is a cross section through an embodiment of a cleaning manifold suitable for use with the cleaning device according to the invention.

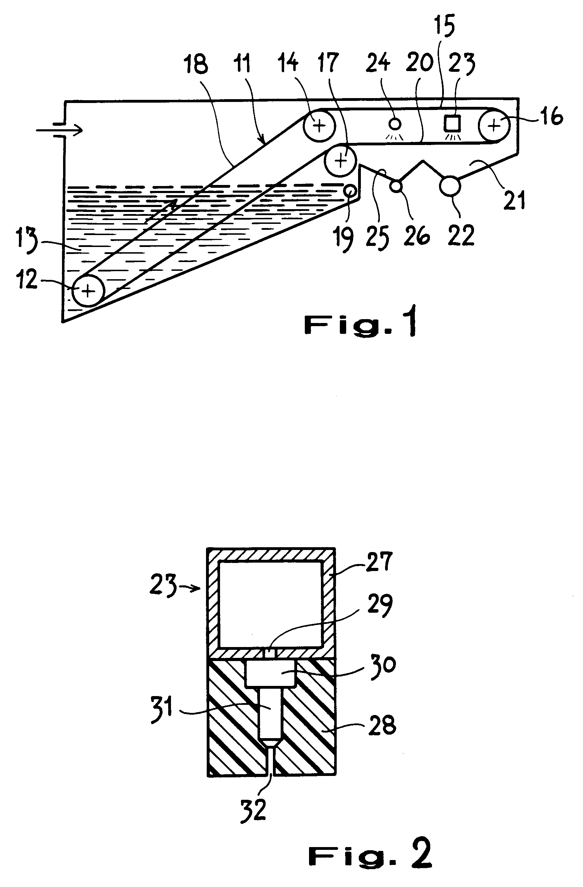

In Fig. 1 there is shown a endless filtering belt 11 guided by a lower roller 12 passes, through a sewage water container 13 slopes up to a first upper roller 14 and through a horizontal part of the belt 15 to a second upper roller 16 guiding the belt back under the horizontal part 15 to a further roller 17 beneath the first upper roller 14. From there the filtering belt 11 extends back to the lower roller 12 at the bottom of the sewage water container 13. The inclined face 18 of the filtering belt 11 passing through the container has its edges close to the sides of the container 13 and provides the operative filtering area. The contaminated water is forced through the filter and into the other part of the container toward an outlet 19 in the upper part of the container. This outlet 19 is located beneath the first upper roller 14.

In the area between the second upper roller 16 ad the roller 17, the filtering belt 11 provides a track 20 with reversed face, to permit residues to fall down into a collecting gutter 21. Individual particles and other loose remnants which fall down after the belt 11 passes over the second upper roller 16 and are collected by a transversly extending screw conveyor 22 which takes the residues to a convenient collecting means, preferably provided with a dewatering device at the end.

To remove residues adhering to the belt 11 a transversly extending blasting manifold 23 supplied from a compressor (not shown), is arranged over the belt and approximately directly over the screw conveyor 22. This manifold may be a tube provided with suitable orifices or blowing slots directed downwardly toward the upper side of the filtering belt 11 and opposite to the residues.

It has been possible to remove different types of residues or sediments with this blowing manifold, which would have otherwise been adhered to the filtering belt and thus build up to ultimately close the filtering belt. A part of the advantageous effect is believed to depend on the warming of the air provided by the blasting or jets through relatively narrow orifices or slots. This heating can take place with relatively low energy consumption, due to the low specific heat of the air, the blasting providing an effective transfer of heat to residues on the filtering belt.

Adjacent to the blasting manifold 23, but downstream therefrom is arranged a jet tube 24 for water jets to imping against the filter belt 11. Said water jets will remove remaining residues loosened by the air jets, but still adhering to the filtering belt. To collect the supplied water and the last of the residues a further crosswise extending gutter 25 is arranged adjacent the collecting gutter 21. This being provided with a transversly extending outlet tube 26. The water from this tube is transferred to the contaminated water container 13.

Thus it is possible to conduct a substantially complete collection of filter residues without substantial consumption of energy and with a water supply which requires no further comprehensive filtering.

In Fig. 2 a section of a embodiment of a blasting manifold 23 suitable for the invention is shown. It comprises a supply tube 27, in this case with a rectangular profile, and a adjoining manifold bar 28 of plastics material. The supply tube 27, which at one end is connected to a supply tube from an air compressor (not shown), is provided with a series of openings 29 toward the manifold bar 28. On the common side, the manifold bar is provided with a longitudinally extending groove 30 functioning as a receiving chamber for the supplied air. From the groove 30 a series of openings 31 connect to a blasting slot 32 on the opposite side. The blasting slot 32 in the example has a width of ca. 0,5 mm and will thus create a narrow and concentrated ribbonlike air blast or jet with high pressure and increased temperature. In a test, a temperature increase from 60°C, to 80°C was measured. At this temperature, the air jet softened and partialy melted any fat residues on the filtering belt thereby allowing them to drip off the filtering belt.

In a particular advantageous embodiment, a toothed belt (not shown) is welded at the edge of the filtering belt, to permit the filtering belt to be operated by a toothed wheel at the second upper roller 17 at the end of the plant. The advantage of this toothed belt in connection with the cleaning device, is that it makes the filtering belt stronger in the area at the blasting manifold 23 and contributes to making the air jet effective at the edge of the filtering belt.

## Claims

1. Method for cleaning an endless filter belt (11), which is located within a container (13) of contaminated water, said filter belt (11) being provided for filtering said contaminated water, and said filter belt (11) being journalled over a series of rollers (12,14,16,17) to have a section (20) running horizontally with the filter residues facing downward, said section being provided with a bar means (23) for blasting air against said section (20) of the filter belt, the bar means (23) comprising nozzles (32) through which the air can leave the bar means (23) **characterized in** that a substantial heating of the blasted air is provided by providing such a high air pressure on the nozzles (32) of the bar means (23) that the temperature of the blasted air is increased to melt fat residues on the filter belt.

2. Cleaning device, in combination with an endless filter belt (11), for carrying out the method of claim 1, characterized in that the filter belt (11) is located within a container (13) of contaminated water, said filter belt (11) being provided for filtering said contaminated water, and said filter belt (11) being journalled over a series of rollers (12,14,16,17) to have a section (20) running horizontally with the filter residues facing downward, said section being provided with a bar means (23) for blasting air against the filter belt, wherein the bar means (23) comprises a supply tube (27) with transversely arranged openings to a manifold bar (28) with an outlet slot (32).

## Patentansprüche

1. Verfahren zum Reinigen eines endlosen Filterbandes (11), das innerhalb eines Behälters (13) verschmutzten Wassers angeordnet ist, das weiterhin vorgesehen ist zum Filtern des verschmutzten Wasser und das auf einer Reihe von Rollen (12, 14, 16, 17) gelagert ist und einen Abschnitt (20) aufweist, der horizontal verläuft, an dem die Filterruckstände nach unten weisen, der ferner mit einem Balken versehen ist, der seinerseits Luft gegen den genannten Abschnitt des Filterbandes bläst und Düsen (32) umfaßt, durch welche die Luft aus dem Balken (23) austreten kann, dadurch gekennzeichnet, daß ein wesentliches Aufheizen der ausgestoßenen Luft herbeigeführt wird durch Erzeugen eines solch hohen Luftdruckes in den Düsen (32) des Balkens (23), daß die Temperatur der ausgestoßenen Luft erhöht wird, um Fettrückstände auf dem Filterband zu schmelzen.

2. Reinigungsvorrichtung in Kombination mit einem endlosen Filterband zum Durchführen des Verfahrens nach Anspruch 1, dadurch gekennzeichnet, daß das Filterband (11) innerhalb eines Behälters (13) mit verschmutztem Wasser angeordnet ist um das verschmutzte Wasser zu filtern, und auf einer Reihe von Rollen (12, 14, 16, 17) gelagert ist, mit einem Abschnitt (20), der horizontal verläuft mit nach unten weisenden Filterrückständen, und der versehen ist mit einem Balken (23), der dem Aufblasen von Luft gegen das Filterband dient und der eine Zufuhrleitung (27) umfaßt, die ihrerseits quer angeordnete Öffnungen zu einem Verteilerstab (28) mit einem Auslaßschlitz (32) aufweist.

## Revendications

1. Procédé de nettoyage d'une bande de filtre sans fin (11), qui est placée à l'intérieur d'un récipient (13) d'eau contaminée, ladite bande de filtre (11) étant prévue pour filtrer ladite eau contaminée, et ladite bande de filtre (11) étant supportée de façon tournante sur une série de rouleaux (12,14,16,17) de manière à présenter une partie (20) se déplaçant horizontalement avec les résidus de filtration tournés vers le bas, ladite partie étant pourvue d'une rampe (23) d'éjection d'air contre ladite partie (20) de la bande de filtre, la rampe (23) comportant des buses (32) par lesquelles l'air peut sortir de la rampe (23), caractérisé en ce qu'il est prévu un chauffage substantiel de l'air éjecté, par création d'une pression d'air sur les buses (32) de la rampe (23) telle que la température de l'air éjecté est augmentée afin de fondre les résidus gras sur la bande de filtre.

2. Dispositif de nettoyage, en combinaison avec une bande de filtre sans fin (11), pour la mise en oeuvre du procédé selon la revendication 1, caractérisé en ce que la bande de filtre (11) est placée à l'intérieur d'un récipient (13) d'eau contaminée, ladite bande de filtre (11) étant prévue pour filtrer ladite eau contaminée, et ladite bande de filtre (11) étant supportée de façon tournante sur une série de rouleaux (12,14,16,17) de manière à présenter une partie (20) se déplaçant horizontalement avec les résidus de filtration tournés vers le bas, ladite partie étant pourvue d'une rampe (23) pour l'éjection d'air contre la bande de filtre, dans lequel la rampe (23) comprend un tube d'alimentation (27) ayant des orifices agencés transversalement vers une rampe de distribution (28) à fente de sortie (32).
